# EUROPEAN PATENT SPECIFICATION

(11) **EP 1 633 828 B1**
(45) Date of publication and mention of the grant of the patent: **25.02.2009**
(21) Application number: 04754890.4
(22) Date of filing: 09.06.2004
(51) Int. Cl.: C09J 7/02

(54) **THERMALLY ACTIVATABLE REMOVABLE ADHESIVE TAPES**
THERMISCH AKTIVIERBARE, ENTFERNBARE KLEBEBÄNDER
RUBANS ADHESIFS AMOVIBLES D'ACTIVATION THERMIQUE

(30) Priority: 13.06.2003 JP 2003169387
(43) Date of publication of application: 15.03.2006
(73) Proprietor: 3M Innovative Properties Company, St. Paul MN 55133-3427 (US)
(72) Inventor: KOBAYASHI, Mitsuaki, Sagamihara, Kanagawa 229-1185 (JP); MIZUNO, Eiji, Sagamihara, Kanagawa 229-1185 (JP); SAKURAI, Aizo, Sagamihara, Kanagawa 229-1185 (JP)
(74) Representative: Vossius & Partner
(86) International application number: PCT/US2004/018423
(87) International publication number: WO 2004/113464

(56) References cited:
- EP-A- 1 201 145
- WO-A-02/36702
- WO-A-92/11333
- US-A- 5 672 402
- DATABASE WPI Section Ch, Week 200273 Derwent Publications Ltd., London, GB; Class A23, AN 2002-679047 XP002303655 & JP 2002 249603 A (MITSUI CHEM INC) 6 September 2002 (2002-09-06)
- PATENT ABSTRACTS OF JAPAN vol. 2003, no. 10, 8 October 2003 (2003-10-08) & JP 2003 160767 A (NITTO DENKO CORP), 6 June 2003 (2003-06-06)
- PATENT ABSTRACTS OF JAPAN vol. 2000, no. 26, 1 July 2002 (2002-07-01) & JP 2001 247828 A (PILOT INK CO LTD), 14 September 2001 (2001-09-14)

## Description

This invention relates to adhesive tapes that firmly adhere to a bonded article at a temperature below an activation temperature and that can be easily removed without damaging surfaces of the bonded article and without leaving a residue.

A wide variety of adhesive tapes are available for use in numerous applications today. Adhesive tapes that include a variety of substrates and adhesive layers have been proposed and put into practical application in the past in accordance with various objectives. In recent years, "removable adhesive tapes" have been developed. Removable adhesive tapes can be removed from a bonded substrate without damaging the bonded substrate when stretched. Such removable adhesive tapes have been put into a variety of practical applications due to their ability to be removed.

For example, Japanese Unexamined Patent Publication No. 6-504077 (WO 92/11333) discloses a tape that includes a substrate and a pressure-sensitive adhesive layer formed on at least one of the principal surfaces of the substrate. The disclosed tape can strongly adhere to a bonded article and can be removed without damaging the bonded article when it is stretched at an angle below about 35° from the surface of the bonded article. The substrate of the disclosed tape is formed of polyolefin, vinyl copolymers, olefinic copolymers, acrylic polymers, etc. These substrates have a Young's modulus of 2,500 psi to 72,500 psi (1.7 x 10⁷ Pa to 5.0 x 10⁸ Pa), an elastic recovery of less than about 50% after stretching, and an elongation at break of at least about 150% in a longitudinal direction.

Another adhesive tape for bonding at least two articles into a unit is disclosed in Japanese Unexamined Patent Publication No. 6-509536. This tape includes a substrate and a pressure-sensitive adhesive tape on at least one of the principal surfaces of the substrate. The disclosed tape can firmly adhere to a support (bonded article) and becomes non-tacky after being stretched. The substrate of the disclosed tape has a Young's modulus of 2,500 psi to 10,000 psi (1.7 x 10⁷ Pa to 6.9 x 10⁷ Pa), an elongation at break of at least 150%, and an elastic recovery of less than about 50% after being stretched.

Japanese Unexamined Patent Publication No. 9-502213 (WO95/06691) disclosed another adhesive tape that includes a substrate and a first pressure-sensitive adhesive applied to at least one of the surfaces of the substrate. The disclosed tape can strongly adhere to a bonded article, but can be peeled without breaking and without leaving a residue of the pressure-sensitive adhesive on the bonded article when pulled at an angle below about 35° from the surface of the bonded article. The substrate of the disclosed tape includes a foam layer having a thickness of 30 mil to 1,000 mil (0,76 mm to 25.4 mm), and has an elongation at break of 50 to 1,200% in a longitudinal direction.

Still another adhesive tape is disclosed in Japanese Unexamined Patent Publication No. 2002-167558. The disclosed adhesive tape includes a substrate and an adhesive layer formed on at least one of the surfaces of the substrate. The disclosed adhesive tape has high bonding strength and can be peeled without leaving the adhesive. The substrate of the disclosed adhesive tape has a low yield point stress or proportional limit stress of 20 N/15 mm or below, and a high elongation at break of at least 30 N/15 mm.

The above-described adhesive tapes of the prior art are designed so that the adhesive tapes can be removed from a bonded article without damaging the bonded article when the adhesive tapes are stretched under ordinary conditions of use, that is, at room temperature. Unfortunately, when the above-described adhesive tapes are used to adhesively bond relatively heavy objects (e.g., a picture frame, sculpture or other art work) to a bonded substrate (e.g., a wall of a building), the relatively heavy object is capable of causing the adhesive tape to stretch at room temperature, reducing the adhesive bond between the object and the bonded substrate, resulting in the object falling from a desired position along the bonded substrate. Consequently, heavy objects that exceed the stretch strength of the above-described adhesive tapes cannot be used with the above-described adhesive tapes. The above-described adhesive tapes can be easily stretched at room temperature and are not suitable for stably fixing such heavy objects to a bonded substrate for an extended period of time.

The present invention is directed to adhesive tapes that address one or more of the above-noted deficiencies of the above-described adhesive tapes of the prior art. The adhesive tapes of the present invention possess stretch properties that are controlled through temperature. At room temperature, or at a temperature below an activation temperature, the adhesive tapes of the present invention possess a relatively low degree of stretch. However, at a temperature above an activation temperature, the adhesive tapes of the present invention possess an increased degree of stretch, enabling removal of the adhesive tape from a bonded substrate without leaving a residue on the bonded substrate. Given their thermally activatable stretch properties, the adhesive tapes of the present invention are capable of stably fixing heavy objects to a bonded substrate for an extended period of time at room temperature without being distorted due to the weight of the heavy object.

It is therefore an objective of the present invention to provide an adhesive tape that cannot be stretched easily and cannot be peeled at a temperature below an activation temperature (e.g. at room temperature) but can be stretched and can be easily peeled from a bonded article without leaving a residue when heated to a temperature exceeding the activation temperature.

To accomplish the obj ective described above, the present invention provides an adhesive tape comprising a film substrate having one or more individual layers, wherein the film substrate has (i) an elastic modulus of at least 7.0 x 10⁸ Pa at a temperature below an activation temperature, said activation temperature ranging from about 25°C to about 100°C, (ii) an elastic modulus of not greater than 5.0 x 10⁸ Pa at a temperature exceeding said activation temperature, and (iii) an elongation at break of at least 150% at a temperature exceeding said activation temperature; an adhesive layer disposed on at least one surface of the film substrate; and a temperature-indicating material disposed within or on the film substrate, wherein the temperature-indicating material experiences a color change when exposed to a color-changing temperature.

Because the substrate of the adhesive tape according to the present invention has an elastic modulus of at least 7.0 x 10⁸ Pa at a temperature below an activation temperature, stretching is difficult and peeling cannot be performed. To peel the adhesive tape, the tape is heated to a temperature exceeding the activation temperature. Above the activation temperature, the substrate has an elastic modulus of not greater than 5.0 x 10⁸ Pa, and an elongation at break of at least 150%. As a result, the adhesive tape can be stretched, and can be peeled easily without leaving any residue on the bonded article.

Accordingly, in one exemplary embodiment, the present invention is directed to an adhesive tape as defined above, wherein at least one layer of the film substrate comprises an aliphatic polyester, polyvinyl chloride, polycarbonate, polycaprolactone, polyethylene terephthalate resin, glycol modified polyethylene terephthalate resin, polybutylene terephthalate resin, polyamide resin, polyvinylidene fluoride, one or more shape memory resins, or a combination thereof.

The present invention allows a method of removing an adhesive tape as defined above from a bonded article, wherein the method comprises the steps of (a) heating the adhesive tape to a temperature greater than an activation temperature ranging from about 25°C to about 100°C, said adhesive tape comprising a film substrate having (i) an elastic modulus of at least 7.0 x 10⁸ Pa at a temperature below the activation temperature, (ii) an elastic modulus of not greater than 5.0 x 10⁸ Pa at a temperature exceeding the activation temperature, and (iii) an elongation at break of at least 150% at a temperature exceeding the activation temperature; and (b) pulling the adhesive tape from the bonded article at an angle of up to 35° relative to a bonded surface on the bonded article.
Fig. 1 is a sectional view showing a structure of an exemplary adhesive tape according to the present invention.
Fig. 2 is a graph showing the elastic modulus of exemplary film substrates used to form adhesive films of the present invention over a temperature range of 25°C to 100°C.
Fig. 3 is a sectional view showing a structure of an exemplary adhesive tape according to the present invention.
Fig. 4 is an explanatory view for explaining a peel test used on an exemplary adhesive film according to the present invention.

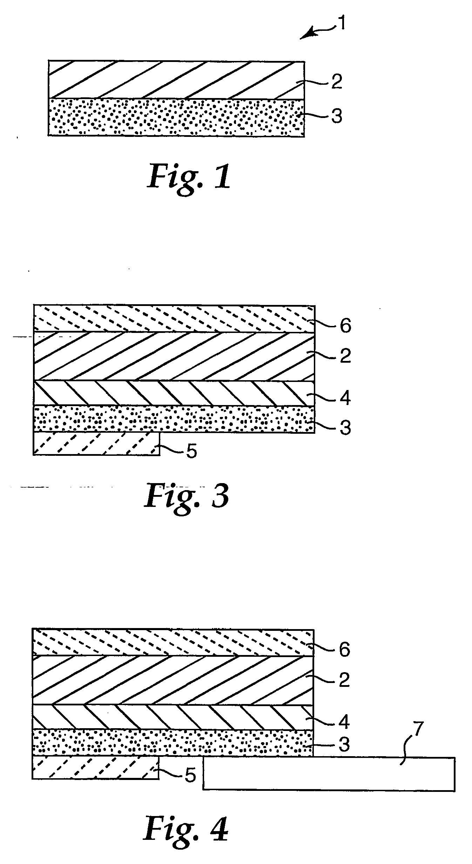

Fig. 1 is a sectional view of an exemplary adhesive tape according to the present invention. Adhesive film 1 according to the present invention includes film substrate 2 and adhesive layer 3 disposed on at least one of the surfaces of film substrate 2. Though not shown in the figure, a second adhesive layer may be disposed on a surface of film substrate 2 opposite adhesive layer 3, that is, on both surfaces of film substrate 2.

Film substrate 2 has an elastic modulus of at least 7.0 x 10⁸ Pa at a temperature below an activation temperature, an elastic modulus of not greater than 5.0 x 10⁸ Pa at a temperature exceeding the activation temperature, and an elongation at break of at least 150% at a temperature exceeding the activation temperature. In some embodiments, film substrate 2 has an elastic modulus of at least 8.0 x 10⁸ Pa (or at least 9.0 x 10⁸ Pa, or at least 1.0 x 10⁹ Pa) at a temperature below an activation temperature, and an elastic modulus of not greater than 5.0 x 10⁸ Pa (or not greater than 1.0 x 10⁸ Pa, or not greater than 5.0 x 10⁷ Pa, or not greater than 1.0 x 10⁷ Pa, or not greater than 5.0 x10⁶ Pa) at a temperature exceeding the activation temperature. In some embodiments, film substrate 2 has an elongation at break of at least 200%, at least 300%, at least 400%, at least 500% or at least 600% at a temperature exceeding the activation temperature. Typically, the activation temperature ranges from about 25°C to about 100°C. The activation temperature will vary depending on the materials and construction of film substrate 2. The above-described elastic modulus values are obtained by conducting measurements in a tensile mode and at a frequency of 1 Hz using a Rheometric RSA II rheometer, a product of Rheometric Science Inc., and the elongation at break values are obtained by measuring a sample having a width of 5 mm and a length of 25 mm at a tensile speed of 300 mm/min.

Any material may be used to form film substrate 2 so long as the material can form a film substrate having the above-described properties. Examples of suitable materials for forming film substrate 2 include, but are not limited to, aliphatic polyesters, polyvinyl chloride (PVC), polycarbonate (PC), polycaprolactone (PCL), polyethylene terephthalate resins (PET), glycol modified polyethylene terephthalate resins (PET-G), polybutylene terephthalate resins (PBT), polyamide resins, and polyvinylidene fluoride. These materials preferably have a low degree of crystallinity. As used herein, a low degree of crystallinity for a given polymer means a crystallinity of less than about 80%. For some of the above-mentioned polymeric materials, the desired degree of crystallinity will be less than about 50%, or less than about 30%, or even less than about 20%. The degree of crystallinity can be lowered by, for example, forming copolymers with other monomers or by subjecting the materials to non-stretching treatments. The degree of crystallinity may be measured using known techniques. In the present invention, the degree of crystallinity is measured using an X-ray diffractometer, such as Model No. RINT1200, commercially available from Rigaku Corporation.

Suitable aliphatic polyesters include, but are not limited to, the following materials: (1) aliphatic polyhydroxycarboxylic acids ranging-from a homopolymer of polylactic acid or polyhydroxycaproic acid to a copolymer of lactic acid with other aliphatic hydroxycarboxylic acids, (2) an aliphatic polyester containing a lactic acid unit, an aliphatic polyvalent carboxylic acid unit and an aliphatic polyhydric alcohol unit, (3) an aliphatic polyester containing a lactic acid unit and a polyfunctional polysaccharide, (4) an aliphatic polyester of an aliphatic polyvalent carboxylic acid such as polybutylene succinate and an aliphatic polyhydric alcohol, and (5) a mixture of the aliphatic polyhydroxycarboxylic acid and any of the aliphatic polyesters described above. When the aliphatic polyhydroxycarboxylic acid and the aliphatic polyester are present as a copolymer, the copolymer can be a random copolymer, an alternating copolymer, a block copolymer or a graft copolymer. The above-described mixtures include polymer blends or alloys containing the above-described polymers or copolymers.

Suitable polylactic acids include poly(L-lactic acid) wherein all of the constituent units consist of L-lactic acid, and poly(D-lactic acid) wherein all of the constituent units consist of D-lactic acid, and poly(DL-lactic acid) wherein L-lactic acid units and D-lactic acid units exist in various proportions. Examples of suitable aliphatic hydroxycarboxylic acids other than aliphatic polyhydroxycarboxylic acids comprised solely of lactic acid units include glycolic acid, 3-hydroxybutyric acid, 4-hydroxybutyric acid, 4-hydroxyvaleric acid, 5-hydroxyvaleric acid, 6-hydroxycaproic acid, and so forth. These aliphatic hydroxycarboxylic acids may be used either individually as a homopolymer or as a copolymer with one another or with lactic acid.

The polylactic acid preferably has a low degree of crystallinity and more specifically, a degree of crystallinity of not higher than 80%. When the degree of crystallinity is high, the elastic modulus at high temperature decreases. In the case of a copolymer of lactic acid, the proportion of D-lactic acid is preferably 40 mol% or lower based on the total moles of monomer used to form the copolymer. When the proportion of D-lactic acid exceeds 40 mol%, the molecular weight of poly(DL-lactic acid) drops remarkably. The molecular weight of the material that constitutes the film substrate is preferably 10,000 or more. For, when the molecular weight is lower than 10,000, a sufficient film strength cannot be obtained.

One example of a polylactic acid is an amorphous polylactic acid (a-PLA) commercially available from Shimazu Seisakusho K. K. under the trade designation LACTY 9800 having a weight average molecular weight of 120,000. This polylactic acid has (i) an activation temperature (Tₐ) of 50°C, (ii) an elastic modulus of 1.7 x 10⁹ Pa at 25°C, and (iii) an elastic modulus of 5.6 x 10⁶ Pa and elongation at break of 650% at 60°C. Therefore, when this polylactic acid is employed to form the film substrate, the above-described properties for the film substrate are achieved, namely, the film substrate has (i) an elastic modulus of not higher than 7.0 x10⁸ Pa at a temperature below the activation temperature, (ii) an elastic modulus of not higher than 5.0 x 10⁸ Pa at a temperature exceeding the activation temperature, and (iii) an elongation at break of at least 150% at a temperature exceeding the activation temperature. When the material constituting the film substrate 2 exhibits by itself the above-described properties, the material may be used to form the film substrate 2. Alternatively, the kind of the monomers constituting the copolymer or the composition ratio may be adjusted so as to achieve the above-described properties.

Other materials generally known as "shape memory resins" may be used individually or in combination with the above-described materials to form film substrate 2. Suitable shape memory resins include, but are not limited to, a polyisoprene type resin, a styrene-butadiene copolymer, a polynorbomane type resin, a polyurethane type resin, a fluorine-containing resin, ε-polycaprolactone, a polyamide resin, etc. Other resins may be blended with the shape memory resins to improve the properties of the latter. Specific commercially available examples of shape memory resins include, but are not limited to, (1) trans-polyisoprene (TPI), a crystalline polyisoprene type resin having a melting point of 67°C commercially available from Kuraray Co; (2) a styrene-butadiene copolymer consisting of styrene units and crystalline butadiene units commercially available from Asahi Kasei Co. under the trade designation ASMER; (3) a polynorbornane type resin obtained by ring-opening polymerization of a cyclopentadiene monomer unit and ethylene commercially available from Nippon Zeon Co. under the trade designation NPRSOREX; and (4) polyurethane resins commercially available from Mitsubishi Heavy Industry Co under the trade designations MM-2500, MM-3500, MM-4500 and MM-5500, and having a Tg ranging from -30°C to 70°C depending on the hard and soft segments used to form the polyurethane resin.

As discussed above, the activation temperature typically ranges from about 25°C to about 100°C. Activation temperatures for some of the above-described materials suitable for forming film substrate 2 are shown in Table 1 below.

**Table 1. Activation Temperatures For Exemplary Film Substrate Materials**

| Film Material | Activation Temperature (Tₐ) |
|---|---|
| amorphous polylactic acid | 50°C |
| amorphous polyvinyl chloride (PVC) | 95°C |
| amorphous polyethylene terephthalate resin (PET) | 75°C |
| glycol modified polyethylene terephthalate resin (PET-G) | 100°C |
| polybutylene terephthalate resin (PBT) | 55°C |
| polyurethane resin | 50°C |

Desirably, the activation temperature is above room temperature, more desirably, ranging from about 50°C to about 100°C, even more desirably, ranging from about 50°C to about 75°C or from about 50°C to about 60°C.

In addition to a single-layered structure formed of the material described above, the film substrate may have a multi-layered structure formed by stacking layers of different materials. The overall thickness of the film substrate (i.e., the sum of the thicknesses of the multiple film layers used to form the film substrate) can vary over a broad range depending on the application, but is generally from about 10 µm to about 1 mm, preferably from about 10 µm to about 250 µm, more preferably about 30 to about 100 µm. When the film thickness is smaller than 10 µm, the film substrate is too thin and cannot keep sufficient tensile strength, or cannot exhibit stiffness capable of withstanding the practical applications of the present invention. When the film thickness exceeds 1 mm, the step of peeling (i.e., removing) the adhesive film from a bonded article becomes substantially difficult due to the high tensile strength of the film substrate.

In one embodiment of the present invention, the adhesive tape has a multi-layered structure and comprises a layer of a second film material (i.e., a film material that does not possess the above-described thermally activatable properties) stacked onto film substrate 2. This additional layer may be sandwiched between film substrate 2 and adhesive layer 3, or may be arranged on film substrate 2 opposite adhesive layer 3. These second film materials can have an elastic modulus of 7.0 x 10⁸ Pa or below, and an elongation at break of at least about 50% at a temperature (25°C, for example) lower than an activation temperature. Examples of second film materials include polyethylene (e.g. high density polyethylene, low density polyethylene, linear low density polyethylene and linear ultra-low density polyethylene), polypropylene and polybutylene; vinyl copolymers such as vinyl acetate; polyolefin-type copolymers such as ethylene-methacrylate copolymer, ethylene-vinyl acetate copolymer, acrylonitrile-butadiene-styrene copolymer and ethylenepropylene copolymer; acrylic polymer and copolymer; and their mixtures. The thickness of this layer, when present, is preferably from about 10 to about 250 µm.

In a further embodiment of the present invention, the adhesive tape has a multi-layered structure and comprises film substrate 2 and an additional layer in the form of a foam layer. The foam layer may be produced by foaming one or more of the above-described film substrate materials using a foaming agent. The thickness of the foamed layer is preferably about 1 to about 2 mm.

Various organic and inorganic fillers may be dispersed in the film substrate as desired to adjust the properties of the film substrate, such as the elastic modulus. A material different from the resin material used to form the film substrate can be used as the organic filler. Calcium carbonate, titanium oxide and silica can be used as the inorganic filler.

The organic or inorganic fillers contained in the film substrate may have various shapes and sizes. Preferably, the organic or inorganic fillers have the shape of spherical particles or needle crystals, or shapes analogous to spherical particles. Though the sizes can vary over a broad range, the sizes are generally from about 1 to about 20 µm. In the case of needle-like whiskers, for example, the size is preferably relatively fine, and the length is preferably within a range of about 1 to about 15 µm and more preferably about 10 µm. When the size of the filler used is smaller than 1 µm, a large amount of the filler becomes necessary to obtain the additional effect of the filler. When the size exceeds 20 µm, adverse effects are likely to occur during film formation and in the resulting film.

The above-described fillers can be present in the resin film in an amount falling within a broad range. Generally, however, the filler is preferably present within a range of about 5 to about 50 wt%. When the amount of the filler is smaller than 5 wt%, the additional effect of the filler cannot be achieved. When the amount of filler exceeds 50 wt%, adverse effects are likely to occur during film formation and in the resulting film. Generally, the amount of filler is preferably about 10 wt%.

The film substrate may be colored as desired. When the film substrate is colored, handling of an adhesive film containing the colored film substrate is improved. The color to be applied may be a single color or a combination of two or more colors in the form of a design.

Film substrate 2 can be produced using technologies that have generally been employed in the past to produce resin films. For example, film substrate 2 can be produced by an extrusion method or by a solvent casting method. In the case of a film substrate having a composite structure, resin materials of first and second resin films are simultaneously extruded from suitable dies and are subsequently stretched. Alternatively, after each resin film is produced in advance, the resin films are stacked and bonded with each other through thermal fusion. The resin films may also be bonded to one another through an adhesive.

Adhesive layer 3 applied to at least one of the surfaces of film substrate 2 can be formed of various adhesives customarily used in the field of adhesive tapes. Examples of adhesives suitable for use in the present invention include, but are not limited to, rubber type adhesives to which a tackiness imparting agent is added such as natural rubber, olefin, polyisoprene, polybutadiene, polyurethane, styrene-isoprene-styrene and styrene-butadiene-styrene block copolymers, acrylic adhesives to which a tackiness imparting agent is added or not added such as copolymers between isooctyl acrylate and acrylic acid (radiation polymerization, solution polymerization, suspension polymerization or emulsion polymerization is possible), silicone type adhesives, and so forth. Among the adhesives listed above, acrylic type adhesive, silicone type adhesives and synthetic rubber type adhesives are particularly useful. Additional particularly useful adhesives include ethylene-vinyl acetate type copolymer adhesive systems or thermoplastic adhesives of a polyolefin-type, a polyamide-type, a polyester-type, a polyurethane-type, etc..

The above-described adhesive is applied in accordance with customary coating technology such as a spin coating method, a knife coating method, a die coating method or a screen printing method. The adhesive can be applied on either one or both of the surfaces of the film substrate, and then subjected to hot air drying, ultraviolet curing, electron beam curing, and so forth. The surface of the film substrate on which the adhesive is applied is preferably subjected to a pre-treatment such as a primer treatment so as to promote application and deposition of the adhesive. The thickness of the adhesive layer can vary over a broad range in accordance with the desired characteristics of the adhesive tape and with other factors, but is generally within a range of about 10 to about 100 µm. The surface of the adhesive layer may have a release liner or may be subjected to other mold releasing treatments that have been customarily employed in the field of adhesives to protect accidental adhesion of the adhesive layer.

To improve handling at the time of removal, the adhesive tape of the present invention is preferably equipped with a tab on an end face thereof. Further a temperature-indicating material is disposed within or on the film substrate. Particles of a temperature-indicating material are preferably mixed with the materials of the film substrate, or a layer of the temperature-indicating material is preferably disposed on the films substrate to represent that an adhesive tape temperature exceeds an activation temperature during heating. Desirably, the temperature-indicating material experiences a color change or discoloration at a color-changing temperature equal to or greater than the activation temperature of the film substrate material. For example, some temperature-indicating materials suitable for use in the present invention experience a color change or discoloration at a color-changing temperature ranging from about 60°C to about 100°C. desirably, the temperature-indicating material experiences a color change or discoloration at a color-changing temperature of about 60°C to 75°C.

Examples of temperature-indicating materials include, but are not limited to, higher fatty acid esters and mercury iodide complexes of cholesterol, thermo-chromic materials of organic compounds the color of which reversibly changes depending on the temperature such as bianthrone, cyanine pigments, spirofuran-type compounds, triphenylinethane-type Ca salts and Mg salts, and temperature-indicating materials the color of which irreversibly changes depending on the temperature such as cobalt, nickel, iron, copper, chromium, manganese and lead. An UV-resistant layer, a moisture-resistant layer, and the like, that does not adversely effect the adhesive films of the present invention and are generally used in the field of adhesive films, may be further disposed on the adhesive films of the present invention.

The adhesive film according to the present invention cannot be removed from a bonded article easily at a temperature below an activation temperature, typically within a temperature range of about 25°C to about 100°C, after the adhesive tape is applied to the bonded article. To peel the adhesive tape, it is necessary to heat the adhesive tape to a temperature higher than the activation temperature and to stretch the portion of the adhesive tape not having the adhesive layer (i.e., non-adhesive portion) at an angle within 35° from the bonded surface, preferably at an angle of 10° or below. Using this technique, the adhesive portion at which the adhesive is applied can be peeled simply and easily. Moreover, during peeling, the adhesive remains with the substrate and not on the surface of the bonded article.

It is a feature of the present invention that when the highly stretched adhesive tape is peeled at a low angle, growth of a crack of an "acute angle" type occurs. The occurrence of the acute angle crack represents the occurrence of stress concentration at a front part of the crack at which a small amount of the adhesive material exists (here, the stress dissipates) similar to the breakdown of vitreous materials. The strong stress concentration at the front part of the crack invites so-called "brittle de-lamination breakdown" of the adhesive. Such a breakdown occurs typically on an interface with limited force due to low energy dissipating in the adhesive material.

When the peel angle is great, on the other hand, that is, when the peel angle is generally greater than 35°, the support does not stretch, and the adhesive becomes fiberized and susceptible to aggregation breakdown. Cracking occurs prior to the "acute angle" crack similar to the breakdown of vitreous materials. Fiberization of the adhesive at a high angle observed in this model is useful as a dissipation mechanism of energy similar to the breakdown of fibrils observed in vitreous materials. The greater the energy dissipation, the greater the peel resistance becomes. Therefore, the force necessary for removing (i.e., peeling) the tape becomes greater. The greater the amount of material necessary for dissipation of energy, the smaller the above-described stress concentration becomes. When aggregation breakdown of the adhesive filaments exists, adhesive residue is left on the bonded article surface and damage of the surface occurs.

The adhesive tape according to the present invention can be used in various fields including, but not limited to, the following fields: (1) fitting applications to surfaces including painted wall sheets, wall paper, plaster, concrete, glass, metals and plastics; (2) marks and reflecting sheets including wall suspension, dispenser, wire clip, body side molding of cars, hand bags and baskets, road marks and signs, car marking, transportation marking, etc; (3) binding or assembly applications; (4) cushion or sound-silencing applications such as underlay cushions and sound-silencing sheets; (5) closure applications including container closure such as box closure, closure for foodstuff and drinking container, diaper closure, surgery drape closure; and (6) removable labels including price tags or identification labels of containers.

Particularly when the adhesive tape according to the present invention is used, stretching and peeling can be achieved by heating the adhesive tape without damaging the bonded article even when a high breaking strength and a low elongation are required at room temperature as required for ordinary packaging tapes. Further, the adhesive tape according to the present invention can be sufficiently used at room temperature. When an adhesive tape of the present invention having adhesive layers on both of its surfaces is used, the adhesive tape can be used to hold an exhibition item, such as a frame, having a certain weight onto a wall surface even though such a bonded assembly had been difficult in the past. When heated, the adhesive tape can be easily removed without damaging the wall and the exhibition item. Because the adhesive tape has a high elastic modulus at room temperature, the adhesive tape does not stretch even when exhibited for a long time, keeping the exhibition item stable for extended periods of time.

When an adhesive tape according to the present invention is used, the adhesive tape cannot be easily removed from a bonded article even intentionally under an ordinary condition, such as, at room temperature. When used as a fitting tape for a burglar-proofing sensor, the adhesive tape of the present invention cannot be peeled easily even when its tab portion is pulled. When the tape is heated by use of a dryer or the like, however, the adhesive tape becomes removable. Consequently, the adhesive tapes of the present invention can be used for burglar-proofing applications to prevent theft and destruction of temporary exhibition items (e.g., vases, sculptures, etc) in public facilities. When used in combination with a first-aid kit for containing home medicines, the adhesive tape of the present invention can prevent children from easily opening the kit and from erroneously taking the contained medicines.

When a large number of sealed boxes are opened or cardboard boxes are re-used as recycle sheets, a great deal of labor, time and cost is necessary to remove bonded sheets. When the adhesive tape of the present invention is used, however, the adhesive tape can be peeled again only when removal is necessary. Therefore, automation and saving of labor can be accomplished. Because the substrate has a high elastic modulus and is hard, the adhesive tape of the present invention can be used for masking cars and traffic signs requiring accuracy in the same way as ordinary tapes. After use, the adhesive tape can be easily peeled without leaving an adhesive residue. Therefore, automation and saving of labor can be accomplished.

The present invention is explained with reference to examples below. It is to be understood, however, that the present invention is not limited in any way to the examples below.

### EXAMPLES

The following substrates were prepared for use in the examples below:

### Film a:

An amorphous polylactic acid resin (a-PLA) commercially available from Shimazu Seisakusho Co. under the trade designation LACTY 9800 and having a weight average molecular weight of 120,000 was heated to 150°C, melted, and cast to obtain a film having a thickness of 190 µm.

### Fihn b:

Twenty (20) parts by weight of hydrophilic amorphous silica particles commercially available from Japan Aerosil Ltd. under the trade designation AEROSIL^{®} 200 and having a mean primary particle size of about 12 nm were added to 100 parts by weight of LACTY 9800 polylactic acid resin. The mixture was kneaded at 150°C and 30 rpm using a Brabender mixer to obtain a filler-containing polylactic acid resin. The resin was heated to 150°C, melted, and cast to obtain a film having a thickness of 220 µm.

### Film c:

A crystalline polylactic acid resin (c-PLA) commercially available from Shimazu Seisakusho Co. under the trade designation LACTY 9031 and having a weight average molecular weight of 143,000 was heated to 150°C, melted, and cast to obtain a film having a thickness of 80 µm. The resulting film was amorphous.

### Film d:

A hard polyvinyl chloride (PVC) film commercially available from Mitsubishi Plastics, Inc. under the trade designation VINYLFOIL and having a thickness of 100 µm was used without stretching.

### Film e:

An amorphous polyethylene terephthalate (a-PET) film commercially available from Mitsubishi Chemical Co. under the trade designation NOVACLEAR and having a thickness of 250 µm was used. The a-PET had a weight average molecular weight of 20,000.

### Film f:

A glycol modified polyethylene terephthalate (PET-G) film commercially available from Sankyo Chemical Co. Ltd. having a thickness of 100 µm was used.

### Film g:

A polybutylene terephthalate (PBT) film commercially available from Sankyo Chemical Co. Ltd. having a thickness of 100 µm was used.

### Film h:

A polyurethane polymer solution commercially available from Dainichiseika Color & Chemicals Co. Ltd. under the trade designation DAIFERAMIN MAU-4308HV was coated onto a release liner and dried at 100°C to form a film having a thickness of 100 µm.

### Film i:

A shrinking polyvinyl chloride film commercially available from Mitsubishi Plastics Inc. under the trade designation HISHIREX 502-AS was shrunk in hot water having a water temperature of 100°C for about 10 seconds to form a film having a thickness of 50 µm.

### Example 1

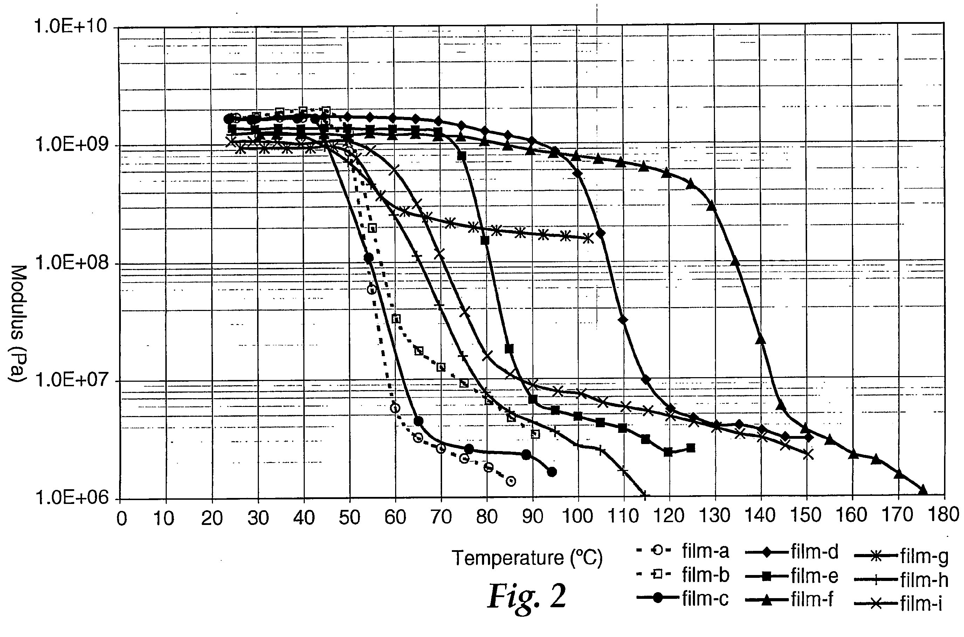

The elastic modulus of films *a* to *i* was measured in a tensile mode, at a frequency of 1 Hz and at temperatures ranging from 25°C to 200°C using a Rheometric RSA II (a product of Rheometric Science Inc.). Fig. 2 shows the measurement results. As shown in Fig. 2, the elastic modulus for films *a* to *i* decreased sharply as the temperature increased from about 45°C to about 150°C. The activation temperature (Tₐ) for each film is determined from the data shown in Fig. 2. The activation temperature (Tₐ) for each film is the temperature at which the elastic modulus decreased to less than 7.0 x 10⁸ Pa, wherein the temperature is rounded to the nearest multiple of 5°C.

Table 2 below provides activation temperatures (Tₐ) for each of films *a* to *i*.

**Table 2. Activation Temperatures For Films a to i**

| Film | Activation Temperature (Tₐ) |
|---|---|
| *a* | 50°C |
| *b* | 50°C |
| *c* | 50°C |
| *d* | 95°C |
| *e* | 75°C |
| *f* | 100°C |
| *g* | 55°C |
| *h* | 50°C |
| *i* | 60°C |

Table 3 below provides elastic modulus data for each of films a to *i* at temperatures below and above the activation temperature for each film based on the data included in Figure 2.

**Table 3. Elastic Modulus Data For Films a to i**

| Film | Elastic Modulus Values Below An Activation Temperature (Tₐ) | | Elastic Modulus Values Above An Activation Temperature (Tₐ) | |
|---|---|---|---|---|
| | Temperature (°C) | Elastic Modulus (Pa) | Temperature (°C) | Elastic Modulus (Pa) |
| *a* | 25 | 1.7x10⁹ | 60 | 5.6x10⁶ |
| *b* | 25 | 1.7x 10⁹ | 75 | 9.2x10⁶ |
| *c* | 25 | 1.7x10⁹ | 65 | 4.4x10⁶ |
| *d* | 25 | 1.7x10⁹ | 115 | 9.7x10⁶ |
| *e* | 25 | 1.4x10⁹ | 90 | 6.7x10⁶ |
| *f* | 25 | 1.2x10⁹ | 145 | 5.9x10⁶ |
| *g* | 25 | 9.4x10⁸ | 60 | 2.7x10⁸ |
| *h* | 25 | 1.2x10⁹ | 80 | 7.7x10⁶ |
| *i* | 25 | 1.1x10⁹ | 90 | 8.9x10⁶ |

### Example 2

An adhesive tape having a structure as shown in Fig. 3 was produced using the following procedure. Film *a* was used as film substrate 2. After corona treatment of one of the surfaces of film *a*, a primer layer 4 was applied to the treated surface. Primer layer 4 was an adhesion promoting toluene solution of chlorinated polypropylene commercially available from 3M Company under the trade designation K-500.

Adhesive layer 3 was prepared as follows. The following materials were mixed to produce a toluene solution containing a rubber-type adhesive:

**Adhesive Layer 3 Composition**

| | |
|---|---|
| FINAPRENE^{®} 411 | 13.176 parts |
| SOLPRENE^{®} 1205 | 7.095 parts |
| PICCOLYTE^{®} A-135 | 20.070 parts |
| SHELLFLEX^{®} 371 | 2.027 parts |
| ETHANOX^{®} 330 | 0.405 parts |
| toluene | 57.027 parts |

| | |
|---|---|
| FINAPRENE^{®} 411 is a styrene-butadiene-styrene block copolymer commercially available from Fina Oil and Chemical Co. SOLPRENE^{®} 1205 is a styrene-butadiene block copolymer commercially available from Indutrus Negromex Co. PICCOLYTE^{®} A-135 is a tackiness-imparting agent commercially available from Hercules Chemical Co. SHELLFLEX^{®} 371 is a naphthalene-type oil commercially available from Shell Chemical Co. ETHANOX^{®} 330 is a phenol-type anti-oxidant commercially available from Ethyl Co. | |

The toluene solution containing the rubber-type adhesive was knife coated onto a transfer film. After drying, the resulting adhesive layer 3 had a thickness of 70 µm. Adhesive layer 3 was transferred from the transfer film onto primer layer 4. A PET film 5 having a length of 15 mm was applied to adhesive layer 3 for use as a gripping tab. On the opposite surface of film *a*, a temperature-indicating material commercially available from Nichiyu Giken Kogyo Co. Ltd. under the trade designation THERMOPAINT R-6 was coated. The temperature-indicating material discolored at 60°C.

### Example 3

An adhesive tape sample was produced using the procedure as outlined in Example 2 with the exception that film *b* was used in place of film *a*.

### Example 4

An adhesive tape was prepared as in Example 2 except that an acrylate adhesive was used in place of the rubber-type adhesive. The adhesive composition was prepared using the following procedure. The following components were placed in a glass pressure bottle.

**Adhesive Layer 3 Composition**

| | |
|---|---|
| 2-ethylhexyl acrylate¹ | 92 parts |
| acrylic acid² | 8 parts |
| ethyl acetate | 233.3 parts |

| | |
|---|---|
| ¹commercially available from K. K. Nippon Shokubai Sha ² commercially available from Wako Junyaku Kogyo Sha | |

After charging the above mixture with 0.15 parts of 2,2'-azobis(2,4-dimethylvaleronitrile) (commercially available from Wako Junyaku Kogyo Sha), a nitrogen gas system was attached to the glass pressure bottle. Nitrogen gas was introduced into the system for about 10 minutes using an inert gas introduction pipe. Following nitrogen purging, the cap of the glass pressure bottle was replaced. Polymerization was carried out with the glass pressure bottle inside a thermostatic water tank at a temperature of 50°C for 20 hours. The resulting ethyl acetate solution of acrylic polymer adhesive was knife coated onto a transfer film. After drying, the resulting adhesive layer 3 had a layer thickness of 70 µm.

### Example 5

An adhesive tape sample was produced using the procedure as outlined in Example 2 with the exception that film *d* was used in place of film *a*.

### Example 6

An adhesive tape sample was produced using the procedure as outlined in Example 2 with the exception that film e was used in place of film *a*.

### Example 7

An adhesive tape sample was produced using the procedure as outlined in Example 2 with the exception that film *h* was used in place of film *a.*

### Example 8

The amount of peel force needed to remove the adhesive tapes of Examples 2 to 7 from a bonded substrate was measured using the following procedure.

### Tensile/peel test 1:

Each adhesive tape was first cut to form tape samples having a width of 15 mm, a length of 50 mm and a tab length of 15 mm. Each tape sample was then bonded to a stainless steel test panel 7 (SUS304) as shown in Fig. 4 in an atmosphere at 25°C using, a single pass of a rubber roller and a pressing force of 2 kg. The length of the bonding portion was 30 mm. One hour later, each sample tape was pulled using the above-described tensile tester and peeled at a speed of 500 mm/min in a direction having an angle of 5° to the bonding-surface. Testing took place within an oven at temperatures ranging from 25°C to 130°C. Peel strength and peel length were measured for each tape sample. As used herein, the peel length for a given tape sample is equal to the final length of the stretched unbonded portion of the tape sample. Table 4 below tabulates the test results.

**Table 4. Peel Force and Peel Length Values**

| Example | Film Details | | Properties at 25°C | | Properties Above Tₐ | | |
|---|---|---|---|---|---|---|---|
| | Film | Tₐ (°C) | Peel Force | Peel Length | T (°C) | Peel Force | Peel Length |
| 2 | *a* | 50 | >50 N/15 mm | < 1 mm | 70 | 2.4 N/15 mm | 70 mm |
| 3 | *b* | 50 | >50 N/15 mm | < 1 mm | 70 | 5.8 N/15 mm | 90 mm |
| 4 | *a* | 50 | >50 N/15 mm | < 1 mm | 70 | 3.5 N/15 mm | 147 mm |
| *5* | *d* | 95 | >50 N/15 mm | < 1 mm | 130 | 3.8 N/15 mm | 25 mm |
| 6 | *e* | 75 | >50 N/15 mm | < 1 mm | 100 | 5.7 N/15 mm | 30 mm |
| 7 | *h* | 50 | >50N/15mm | < 1 mm | 70 | 4.3 N/15 mm | 100 mm |

As shown in Table 4, the adhesive tapes of the present invention cannot be removed from the test substrate by stretching the tape at a temperature below the activation temperature (Tₐ). Attempts to remove the adhesive tapes require greater than 50 N/15 mm peel force, and result in a peel length of less than 1 mm. However, at a temperature above the activation temperature (Tₐ), the adhesive tapes of the present invention easily peel from the test substrate requiring less than 5.8 N/15 mm of peel force, and resulting in a substantial peel length.

### Example 9

The amount of peel force needed to remove adhesive tapes of Examples 2 to 4 from a heated bonded substrate was measured using the following tensile/peel test procedure.

### Tensile/peel test 2:

Each adhesive tape sample was bonded to a stainless steel test panel as described in Tensile/peel test 1 above. Each stainless steel test panel was then heated by use of a dryer. When a temperature-indicating paint changed color indicating a temperature of 60°C, each adhesive tape sample was pulled and peeled at a speed of 500 mm/min in a direction having an angle of 5° to the bonding surface to measure the peel strength and the peel length. Table 5 below tabulates the test results.

**Table 5. Peel Force and Peel Length Values**

| Example | Dryer Heating | |
|---|---|---|
| | Peel Force | Peel Length |
| 2 | 3.5N/15mm | 40 mm |
| 3 | 4.0 N/15 mm | 65 mm |
| 4 | 5 N/15 mm | 54 mm |

As can be seen from the results above, adhesive tapes according to the present invention could be pulled and peeled from the test panel when heated to a temperature exceeding the activation temperature of the film substrate without rupturing the adhesive layer.

### Example 10

The proportional limit stress, strength at break, and elongation at break were measured for films *a* and *b*. Sample films having a width of 5 mm and a length of 25 mm were tested at a tensile speed of 300 mm/min using a tensile testing machine, RTC-1325 of A & D Company Ltd. in accordance with standard JIS K6251. Table 6 tabulates the measurement results.

**Table 6. Tensile Properties of Exemplary Film Substrates**

| | film *a* | | film *b* | |
|---|---|---|---|---|
| temperature | 25°C | 60°C | 20°C | 60°C |
| proportional limit stress (N/15 mm) | - | 6 | - | 12 |
| strength at break (N/15 mm) | 150 or more | 27 | 150 or more | 45 or more |
| elongation at break (%) | 4% or below | 650% | 4% or below | 650% or more |
| elastic modulus (Pa) | 1.7 x 10⁹ | 5.6 x 10⁶ | 1.7 x 10⁹ | 3.1 x 10⁷ |

As can be seen from the result above, each of films *a* and *b* had a relatively high elastic modulus at 25°C, but the elastic modulus dropped as the temperature increased to 60°C. Further, the elongation at break of each of films *a* and *b* was relatively high at 60°C compared to the elongation at break measurements of each of films *a* and *b* at 25°C.

## Claims

1. An adhesive tape comprising:
a film substrate having one or more individual layers, wherein the film substrate has (i) an elastic modulus of at least 7.0 x 10⁸ Pa at a temperature below an activation temperature, said activation temperature ranging from about 25°C to about 100°C, (ii) an elastic modulus of not greater than 5.0 x 10⁸ Pa at a temperature exceeding said activation temperature, and (iii) an elongation at break of at least 150% at a temperature exceeding said activation temperature;
an adhesive layer disposed on at least one surface of the film substrate; and
a temperature-indicating material disposed within or on the film substrate, wherein the temperature-indicating material experiences a color change when exposed to a color-changing temperature.

2. The adhesive tape of claim 1, wherein at least one layer of the film substrate comprises an aliphatic polyester, polyvinyl chloride, polycarbonate, polycaprolactone, polyethylene terephthalate resin, glycol modified polyethylene terephtalate resin, polybutylene terephthalate resin, polyamide resin, polyvinylidene fluoride, one or more shape memory resins, or a combination thereof.

3. The adhesive tape of claim 1, wherein the temperature-indicating material comprises a higher fatty acid ester; mercury iodide complexes of cholesterol; bianthrone; cyanine pigments; spirofuran-type compounds; triphenylmethane-type Ca and Mg salts; cobalt; nickel; iron; copper; chromium; manganese; lead; or a combination thereof.

## Patentansprüche

1. Klebeband mit:
einem Foliensubstrat, das eine oder mehrere einzelne Schichten aufweist, wobei das Foliensubstrat (i) einen Elastizitätsmodul von mindestens 7,0 x 10⁸ Pa bei einer Temperatur unter einer Aktivierungstemperatur aufweist, wobei die Aktivierungstemperatur von ungefähr 25°C bis ungefähr 100°C reicht, (ii) einen Elastizitätsmodul von höchstens 5,0 x 10⁸ Pa bei einer Temperatur über der Aktivierungstemperatur aufweist, und (iii) eine Bruchdehnung von mindestens 150% bei einer Temperatur über der Aktivierungstemperatur aufweist;
einer Klebeschicht, die auf mindestens einer Fläche des Foliensubstrats angeordnet ist; und
einem temperaturanzeigenden Material, das in oder auf dem Foliensubstrat angeordnet ist, wobei das temperaturanzeigende Material eine Farbänderung erfährt, wenn es einer farbändernden Temperatur ausgesetzt wird.

2. Klebeband nach Anspruch 1, wobei mindestens eine Schicht des Foliensubstrats ein aliphatisches Polyester, Polyvinylchlorid, Polycarbonat, Polycaprolacton, Polyethylenterephthalatharz, glykolmodifiziertes Polyethylenterephthalatharz, Polybutylenterephthalatharz, Polyamidharz, Polyvinylidenfluorid, ein oder mehr Formgedächtnisharze oder eine Kombination daraus umfasst.

3. Klebeband nach Anspruch 1, wobei das temperaturanzeigende Material einen höheren Fettsäureester; Quecksilberiodidkomplexe von Cholesterin; Bianthron; Cyaninpigmente; Verbindungen vom Spirofuran-Typ; Ca- und Mg-Salze vom Triphenylmethan-Typ; Kobalt; Nickel; Eisen; Kupfer; Chrom; Mangan; Blei; oder eine Kombination daraus umfasst.

## Revendications

1. Ruban adhésif comprenant :
un substrat en film présentant une ou plusieurs couches individuelles, où le substrat en film présente (i) un module élastique d'au moins 7,0 x 10⁸ Pa à une température en dessous d'une température d'activation, ladite température d'activation s'échelonnant d'environ 25°C à environ 100°C, (ii) un module élastique d'au plus 5,0 x 10⁸ Pa à une température dépassant ladite température d'activation, et (iii) un allongement à la rupture d'au moins 150 % à une température dépassant ladite température d'activation ;
une couche adhésive disposée sur au moins une surface du substrat en film ;
et
une matière indicatrice de la température disposée dans ou sur le substrat en film, où la matière indicatrice de la température fait l'objet d'un changement de couleur lorsqu'elle est exposée à une température changeant la couleur.

2. Ruban adhésif selon la revendication 1, dans lequel au moins une couche du substrat en film comprend un polyester aliphatique, un polychlorure de vinyle, un polycarbonate, une polycaprolactone, une résine de polyéthylène-téréphtalate, une résine de polyéthylène-téréphtalate modifiée par du glycol, une résine de polybutylène-téréphtalate, une résine de polyamide, un polyfluorure de vinylidène, une ou plusieurs résines en mémoire de forme, ou une combinaison de ceux-ci.

3. Ruban adhésif selon la revendication 1, dans lequel la matière indicatrice de la température comprend un ester d'acide gras supérieur ; des complexes à l'iodure de mercure du cholestérol ; la bianthrone ; des pigments cyanine ; des composés du type spirofurane ; des sels de Ca et de Mg du type triphénylméthane ; le cobalt ; le nickel ; le fer ; le cuivre ; le chrome ; le manganèse ; le plomb ; ou une combinaison de ceux-ci.
